# EUROPEAN PATENT APPLICATION

(11) **EP 3 002 707 A1**
(43) Date of publication of application: **06.04.2016**
(21) Application number: 14187365.3
(22) Date of filing: 01.10.2014
(51) Int. Cl.: G06F 21/60, G06F 3/044, G06F 3/0488, G06Q 20/32, G06F 3/041

(54) **A data transfer device and method of two-way data transfer**

(71) Applicant: Puik Teknoloji A.S., 34418 Istanbul (TR)
(72) Inventor: Yogurtcu, Osman Eser, 34418 Istanbul (TR); Güner, Dinc, 34418 Istanbul (TR)
(74) Representative: Sevinç, Erkan

(57) **Abstract**

The present invention relates to a data transfer device having computing abilities, for two-way data transfer by direct contacting with a capacitive multi-touch screen of a portable electronic appliance, wherein said data transfer device comprises at least one data receiver on a surface thereof, said data receiver(s) comprises at least one color sensor; and at least one capacitive data transmitter is provided on said surface; such that, in use, two-way data transfer between the data transfer device and the capacitive multi-touch screen of the portable electronic appliance, takes place through the capacitive multi-touch screen of said portable electronic appliance, provided that a software enabling interaction with said data transfer device is running on said portable electronic appliance. Also a method of two-way data transfer between a portable electronic appliance and a data transfer device, another method for two-way data transfer between a portable electronic appliance and a remote device through a data transfer device in connection with said remote device, and a further method of two-way data transfer between a first portable electronic appliance and a second portable electronic appliance through interconnected first and second data transfer devices (10, 11), are proposed.

## Description

### Technical Field of the Invention

The present invention relates to a data transfer device and a method of two-way data transfer using such data transfer device.

### Objects of the Invention

An object of the present invention is to provide a data transfer device for safe delivery of data.

Another object of the present invention is to provide a method of two-way data transfer for safe delivery of data.

A further object of the present invention is to provide a safe method of data transfer between a portable electronic appliance and a remote device.

A further object of the present invention is to provide a safe method of data transfer between a first portable electronic appliance and a second portable electronic appliance.

A further object of the present invention is to provide a safe and rapid method of authentication of payment and/or authorization.

### Summary of the Invention

The present invention relates to a data transfer device having computing abilities, for two-way data transfer by direct contacting with a capacitive multi-touch screen of a portable electronic appliance, wherein said data transfer device comprises at least one data receiver on a surface thereof, said data receiver(s) comprises at least one color sensor; and at least one capacitive data transmitter is provided on said surface; such that, in use, two-way data transfer between the data transfer device and the capacitive multi-touch screen of the portable electronic appliance, takes place through the capacitive multi-touch screen of said portable electronic appliance, provided that a software enabling interaction with said data transfer device is running on said portable electronic appliance. Also a method of two-way data transfer between a portable electronic appliance and a data transfer device, another method for two-way data transfer between a portable electronic appliance and a remote device through a data transfer device in connection with said remote device, and a further method of two-way data transfer between a first portable electronic appliance and a second portable electronic appliance through interconnected first and second data transfer devices (10, 11), are proposed.

### Brief Description of the Figures

The figures whose brief explanations are herewith provided are solely intended for providing a better understanding of the present invention and are as such not intended to define the scope of protection or the context in which said scope is to be interpreted in the absence of the description.

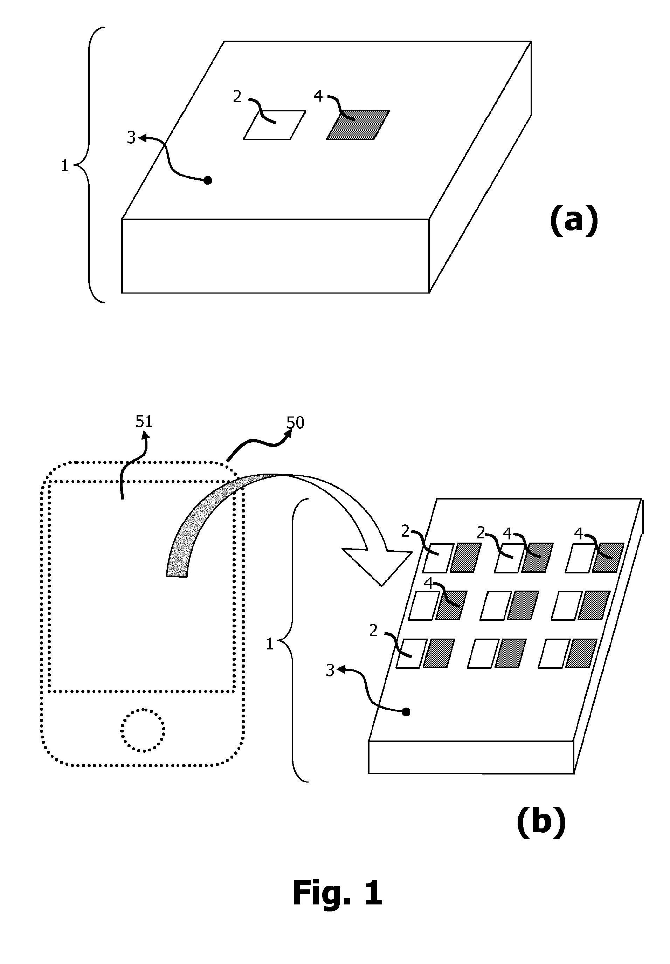

Figure 1 (a) is a schematic perspective view of an embodiment, and (b) is a schematic perspective view of another embodiment of the data transfer device according to the present invention.
Figure 2 is a schematic view of an aspect of the method according to the present invention.
Figure 3 is a schematic view of a further aspect of the method according to the present invention.

### Detailed Description of the Invention

Referring now to the figures outlined above, the present invention proposes a data transfer device (1) having computing abilities, for two-way data transfer by direct contacting with a capacitive multi-touch screen (51) of a portable electronic appliance (50) having computing capabilities, wherein:
said data transfer device comprises at least one data receiver (2) on a surface (3) thereof, said data receiver(s) comprises at least one color sensor, and at least one capacitive data transmitter (4) is provided on said surface (3), such that, in use, two-way data transfer between the data transfer device (1) and the portable electronic appliance (50), takes place through the capacitive multi-touch screen (51), provided that a software enabling interaction with said data transfer device is running on said portable electronic appliance (50).

In one embodiment according to the present invention, the color sensor comprises a set of three differently filtered photoresistors, photodiodes, or phototransistors.

The data transfer device according to the present invention is suitable to read a barcode, a QR code (i.e. a quick response code) or any other visual code which is displayable on a capacitive multi-touch screen, by means of said color sensor(s). The color code can also be alternating colors appearing on said capacitive multi-touch screen (51), wherein only one color is displayed at a time, and the color is changing/alternating with time. The portable electronic appliance can be a smart phone, a tablet computer or another device having computing capabilities and a capacitive multi-touch screen.

In another embodiment according to the present invention, said color sensor comprises (or each of a plurality of color sensors comprises) a single sensor component which is sensitive for various frequencies for different colors.

The present invention further proposes a method of two-way data transfer between a first data transfer device (10) and a first portable electronic appliance having a capacitive multi-touch screen, wherein said first data transfer device (10) comprises at least one data receiver (2) on a surface (3) thereof, at least one capacitive data transmitter (4) is provided on said surface (3), and said first portable electronic appliance runs a software enabling interaction with said first data transfer device (10); said method comprises
bringing the capacitive multi-touch screen of the first portable electronic appliance into contact with capacitive data transmitter(s) (4) provided on said surface (3) of the first data transfer device (10); and
transfer of a first set of data from the first data transfer device (10) to the first portable electronic appliance through the capacitive data transmitter(s) and the capacitive multi-touch screen; and/or transfer of a second set of data in optical form, from the first portable electronic appliance to the first data transfer device (10), through the capacitive multi-touch screen and the data receiver(s).

Said remote device can be e.g. a computer.

In one aspect of the method according to the present invention, said method further comprises following sequential steps:
a) whilst said software is running, bringing the capacitive multi-touch screen of the first portable electronic appliance into contact with the data transmitter(s) (3) provided on the surface (3) of said first data transfer device (10), such that each of the data receiver(s) (2) and data transmitter(s) (3) reciprocate the capacitive multi-touch screen; thus, during data transfer, data are safely delivered from the data transmitter(s) to the respective data receiver(s);
b) sensing of the presence of the first portable electronic appliance by the first data transfer device (10); thus the presence of the first electronic appliance on the data transfer device is mandated for the commencement of any data transfer, and further safety in data delivery is achieved;
c) capacitive transmission of a first set of data from the first data transfer device (10) to the capacitive multi-touch screen of the first portable electronic appliance through the capacitive data transmitter(s) (4); thus the two-way data transfer starts (or gets triggered) by the data transfer device;
d) calculation of color code(s) representing a second set of data to be transmitted from the first portable electronic appliance to the first data transfer device (10), wherein said calculation is performed by said first portable electronic appliance;
e) apparition of said color code(s) representing said second set of data, on the capacitive multi-touch screen of the first portable electronic appliance,
f) reception of said second set of data by the data receiver(s) (2).

Preferably, the step (f) is followed by a step of release of a visual and/or acoustic signal by the first data transfer device (10) and/or the first portable electronic appliance indicating that the data transfer is complete. Thus, a user can be sensorially informed of the completion of the two-way data transfer, data loss due to a premature separation of the portable electronic appliance and the data transfer device is prevented.

In an embodiment according to the present invention, the data transfer device (1, 10, 11) is preferably suitable to be brought into congruence with a remote device (20) via wireless or wired data connection (200), such that, in use, data is transferred between the remote device (20) and the first portable electronic appliance (50) through the first data transfer device (10). Thus, e.g. a centralized further use of the data is enabled.

Accordingly, an aspect of the method according to the present invention is proposed, wherein said first data transfer device (10) is in wireless or wired data connection (200) with a remote device (20) such that data is transferred between the remote device (20) and the first portable electronic appliance through the first data transfer device (10); wherein said method further comprises the following steps:
establishment data connection (200) between said remote device and said first data transfer device (10) is established before the step (a), and
step (f) is followed by transfer of the second set of data or signals derived from said second set of data, from the first data transfer device (10) to the remote device (20).

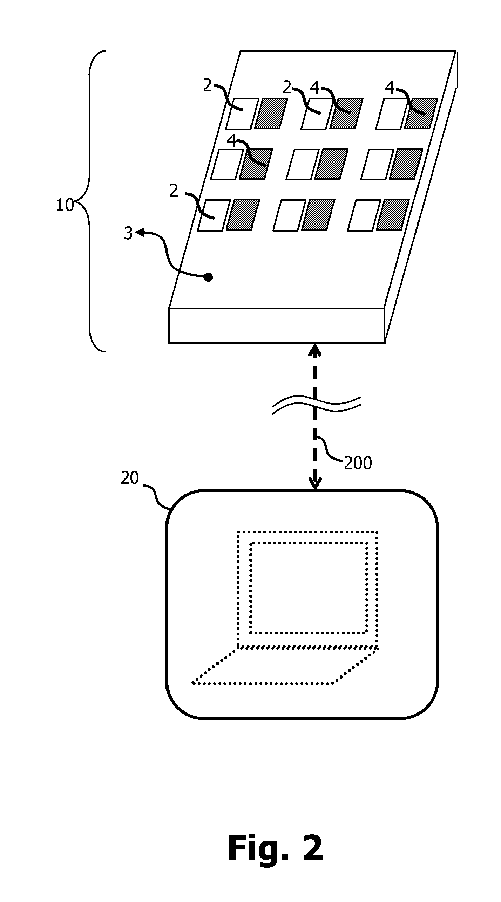

A schematic view with respect to said aspect of the method according to the present invention is provided in Fig. 2.
In another embodiment according to the present invention, the data transfer device (1) is a first data transfer device (10) which is suitable to be brought into congruence with a second data transfer device (11) comprising the features of the first data transfer device (10), via wireless or wired data connection (200); such that, in use, data is transferred between the said portable electronic appliance (50) which is a first electronic appliance, and a second portable electronic appliance (not shown in the respective Figure) which comprises the features of the first portable electronic appliance.

Accordingly, a further aspect of the method according to the present invention is proposed, wherein said first data transfer device (10) is in wireless or wired data connection (200) with a second data transfer device (11) comprising the features of the first data transfer device (10); such that data is transferred between said first portable electronic appliance (not shown in the respective Figure) and a second portable electronic appliance (not shown in the respective Figure) which comprises the features of the first portable electronic appliance. Thus, data transfer between said first and second portable electronic appliances is enabled through interconnected first and second data transfer devices (10, 11) (a set of paired data transfer devices according to the present invention). Said method further comprises the following steps:
before the step (d), preparation of data to be transferred from the first portable electronic appliance, said preparation is performed by the first portable electronic appliance;
before the step (e), establishing data connection between said first data transfer device (10) and said second data transfer device (11);
before the step (e), bringing the capacitive multi-touch screen of the second portable electronic appliance into contact with said second data transfer device (11), such that each of the data receiver(s) (2) and data transmitter(s) (3) reciprocate the capacitive multi-touch screen of the second portable electronic appliance, whist a software enabling interaction with said second data transfer device (11) is running on said second portable electronic appliance; and sensing of the presence of the second portable electronic appliance by the second data transfer device (11); and
upon the step (f), transferring the second set of data or signals derived from said second set of data, from the first data transfer device (10) to the second data transfer device (11); followed by capacitive transmission of said second set of data or signals derived from said second set of data, from said second data transfer device (11) to the capacitive multi-touch screen of the second portable electronic appliance through the capacitive data transmitter(s) of the second data transfer device (11).

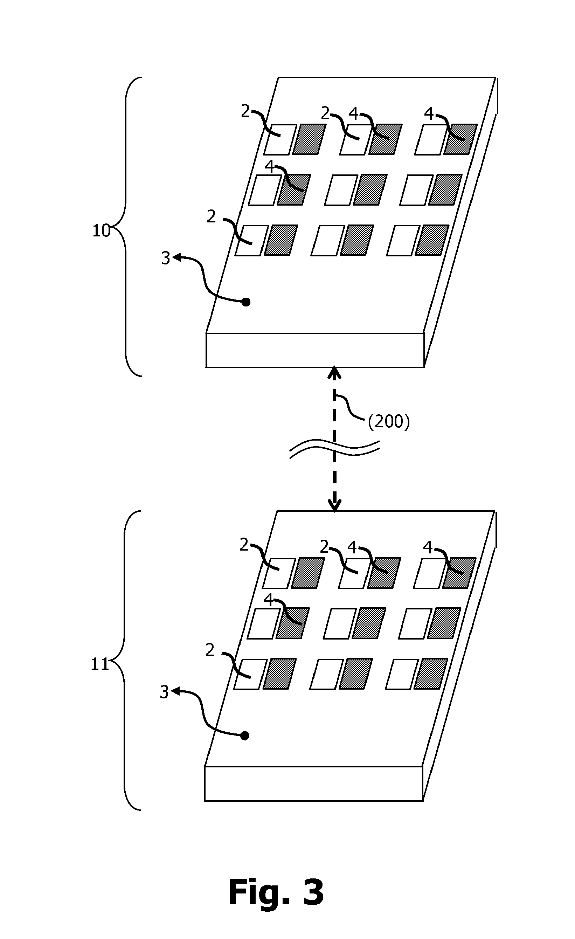

A schematic view with respect to said further aspect of the method according to the present invention is provided in Fig. 3.

Preferably, in any aspect of the method according to the present invention, data is transmitted from the capacitive transmitter(s) to the capacitive multi-touch screen(s) according to Manchester Coding. Thus, a high-speed data transmission is enabled for saving time.

In a preferred embodiment according to the present invention, the data transfer device (1) further comprises a sensor (not shown in the Figures) for, in use, sensing the presence of a portable electronic appliance (50) when the portable electronic appliance (50) is brought into contact with the data transfer device (1). Thus, in use, the data transfer device (1) is able to mandate the presence of the first electronic appliance (50) thereon for the commencement of any data transfer. Said sensor can be a pressure sensor which senses the presence of the portable electronic appliance (50) when the portable electronic appliance is placed on said surface of the data transfer device (1). Alternatively, the sensor can be an optical sensor (e.g. a photosensor, photodetector, photocell, etc.). Alternatively, the data transfer device (1) comprises both of the pressure and optical sensors together.

Accordingly, a further aspect of the method according to the present invention is proposed, wherein the first data transfer device (10) further comprises a pressure sensor, and the weight of the first portable electronic appliance is sensed thereby when the first portable electronic appliance is placed on said surface of the data transfer device. Thus the above step (b) can be performed via said pressure sensor.

A method according to any of the Claims 9-11, wherein the second data transfer device (11) further comprises a sensor for, in use, sensing the presence of a second portable electronic appliance when said second portable electronic appliance is brought into contact with the data transmitter(s) of said second data transfer device (11). Thus, in use, the second data transfer device (11) is able to mandate the presence of the second portable electronic appliance thereon for enabling data transfer between said second data transfer device (11) and said second portable electronic appliance. Said sensor can be a pressure sensor which senses the presence of the second portable electronic appliance when the second portable electronic appliance is placed on said surface of the second data transfer device (11). Alternatively, the sensor can be an optical sensor (e.g. a photosensor, photodetector, photocell, etc.). Alternatively, the second data transfer device (11) according to the present invention comprises both of the pressure and optical sensors together.

A further aspect of the method according to the present invention is proposed, wherein the method is followed by authentication of a payment for a product or service. Said method can also used for granting access into a facility (e.g. into a building through a gate lock associated with said data transfer device) or to an information system (e.g. to a database through a computer associated with said data transfer device) by associating the data transfer device with a respective access granting system.

The portable electronic appliance is to be provided with software to be activated prior to contacting the data transmitter(s) (4) provided on the surface (3) of the data transfer device, for safe use of the data transfer method according to the present invention. Thus, the interaction between the portable electronic appliance and the data transfer device is only possible under control of the user of the portable electronic appliance and further data safety is achieved.

The data transfer device according to the present invention is preferably equipped with one or more further data input/output means (e.g. Wi-Fi™, Bluetooth™, Bluetooth LE™, USB™ connector, a SIM card slot and respective elements for supporting GSM data transmission technologies such as GPRS, EDGE, 3G, 4G) for wired and/or wireless data transmission to/from a further device such as said second data transfer device (11) or said remote device.

The capacitive data transmitter of the data transfer device according to the present invention is a programmable negative current provider, which is meant to be, during data transmission, imitating the conductive behavior of a conductive substance such as human skin in contact with an active capacitive touch screen. Further, said surface of the data transfer device is preferably provided with two or more of said capacitive data transmitters.

Said surface of the data transfer device according to the present invention is preferably provided with two or more of said data receivers.

Said data transfer device preferably comprises a data storage means (e.g. a memory card). Further, since the data transfer device according to the present invention has computing abilities as emphasized above and in the Claim 1, it is deducible for skilled person in the art that said data transfer device comprises means for computing e.g. a microchip, and preferably said computing means is a processor for prompt and accurate data transfer by rapid computing.

Thus, each of the following objects is achieved by the present invention:
- provision of a data transfer device for safe delivery of data;
- provision of a method of two-way data transfer for safe delivery of data;
- provision of a safe method of data transfer between a portable electronic appliance and a remote device;
- provision of a safe method of data transfer between a first portable electronic appliance and a second portable electronic appliance; and
- provision of a safe and rapid method of authentication of payment and/or authorization.

## Claims

1. A data transfer device (1) having computing abilities, for two-way data transfer by direct contacting with a capacitive multi-touch screen (51) of a portable electronic appliance (50), **characterized in that**
said data transfer device comprises at least one data receiver (2) on a surface (3) thereof, said data receiver(s) comprises at least one color sensor, and
at least one capacitive data transmitter (4) is provided on said surface (3),
such that, in use, two-way data transfer between the data transfer device (1) and the portable electronic appliance (50), takes place through the capacitive multi-touch screen (51), provided that a software enabling interaction with said data transfer device (1) is running on said portable electronic appliance (50).

2. A data transfer device according to the Claim 1, wherein said color sensor comprises a set of three differently filtered photoresistors, photodiodes, or phototransistors.

3. A data transfer device according to the Claim 1, wherein said color sensor comprises a single sensor component which is sensitive for various frequencies for different colors.

4. A method of two-way data transfer between a first data transfer device (10) and a first portable electronic appliance having a capacitive multi-touch screen, wherein said first data transfer device (10) comprises at least one data receiver (2) on a surface (3) thereof, at least one capacitive data transmitter (4) is provided on said surface (3), and said first portable electronic appliance runs a software enabling interaction with said first data transfer device (10); said method comprises
bringing the capacitive multi-touch screen of the first portable electronic appliance into contact with capacitive data transmitter(s) (4) provided on said surface (3) of the first data transfer device (10); and
transfer of a first set of data from the first data transfer device (10) to the first portable electronic appliance through the capacitive data transmitter(s) (4) and the capacitive multi-touch screen; and/or transfer of a second set of data in optical form, from the first portable electronic appliance to the first data transfer device (10), through the capacitive multi-touch screen and the data receiver(s).

5. A method according to the Claim 4, wherein said method further comprises following sequential steps:
a) whilst said software is running, bringing the capacitive multi-touch screen of the first portable electronic appliance into contact with the data transmitter(s) (3) provided on the surface (3) of said first data transfer device (10), such that each of the data receiver(s) (2) and data transmitter(s) (3) reciprocate the capacitive multi-touch screen;
b) sensing of the presence of the first portable electronic appliance by the first data transfer device (10);
c) capacitive transmission of a first set of data from the first data transfer device (10) to the capacitive multi-touch screen of the first portable electronic appliance through the capacitive data transmitter(s) (4);
d) calculation of color code(s) representing a second set of data to be transmitted from the first portable electronic appliance to the first data transfer device (10); said calculation is performed by said first portable electronic appliance,
e) apparition of said color code(s) representing said second set of data, on the capacitive multi-touch screen of the first portable electronic appliance,
f) reception of said second set of data by the data receiver(s) (2).

6. A method according to the Claim 5, wherein the step (f) is followed by a step of release of a visual and/or acoustic signal by the first data transfer device (10) and/or the first portable electronic appliance indicating that the data transfer is complete.

7. A data transfer device according to any of the Claims 1-3, wherein the data transfer device (1) is suitable to be brought into congruence with a remote device (20) via wireless or wired data connection, such that, in use, data is transferred between the remote device (20) and the first portable electronic appliance (50) through the data transfer device (1).

8. A method according to any of the Claims 5-6, wherein said first data transfer device (10) is in wireless or wired data connection (200) with a remote device (20) such that data is transferred between the remote device (20) and the first portable electronic appliance through the first data transfer device (10); said method further comprises the following steps:
establishment of data connection (200) between said remote device (20) and said first data transfer device (10) before the step (a), and
step (f) is followed by transfer of the second set of data or signals derived from said second set of data, from the first data transfer device (10) to the remote device (20).

9. A data transfer device according to any of the Claims 1-3, wherein said data transfer device (1) is a first data transfer device (10) which is suitable to be brought into congruence with a second data transfer device (11) comprising the features of the first data transfer device (10) (1), via wireless or wired data connection (200); such that, in use, data is transferred between the said portable electronic appliance which is a first electronic appliance, and a second portable electronic appliance which comprises the features of the first portable electronic appliance.

10. A method according to the Claim 5, wherein said first data transfer device (10) is in wireless or wired data connection (200) with a second data transfer device (11) comprising the features of the first data transfer device (10) (1), such that data is transferred between said first portable electronic appliance and a second portable electronic appliance which comprises the features of the first portable electronic appliance; said method further comprises the following steps:
before the step (d), preparation of data to be transferred from the first portable electronic appliance, said preparation is performed by the first portable electronic appliance,
before the step (e), establishing data connection between said first data transfer device (10) and said second data transfer device (11),
before the step (e), bringing the capacitive multi-touch screen of the second portable electronic appliance into contact with the data transmitter(s) (3) provided on the surface (3) of said second data transfer device (11), such that each of the data receiver(s) (2) and data transmitter(s) (3) reciprocate the capacitive multi-touch screen of the second portable electronic appliance, whist a software enabling interaction with said second data transfer device (11) is running on said second portable electronic appliance; and sensing of the presence of the second portable electronic appliance by the second data transfer device (11); and
upon the step (f), transferring the second set of data or signals derived from said second set of data, from the first data transfer device (10) to the second data transfer device (11); followed by capacitive transmission of said second set of data or signals derived from said second set of data, from said second data transfer device (11) to the capacitive multi-touch screen of the second portable electronic appliance through the capacitive data transmitter(s) of the second data transfer device (11).

11. A method according to any of the Claims 4, 5, 6, 8 and 10, wherein data is transmitted from the capacitive transmitter(s) to the capacitive multi-touch screen(s) according to Manchester Coding.

12. A data transfer device according to any of the Claims 1-3, wherein the data transfer device (1) further comprises a sensor for, in use, sensing the presence of a portable electronic appliance (50) when the capacitive multi-touch screen (51) of the portable electronic appliance is brought into contact with the data transfer device (1).

13. A method according to any of the Claims 4, 5, 6, 8 and 10, wherein the first data transfer device (10) further comprises a pressure sensor, and the weight of the first portable electronic appliance is sensed thereby when the first portable electronic appliance is placed on said surface of the data transfer device; and the second data transfer device (11) further comprises a sensor for, in use, sensing the presence of a second portable electronic appliance when said second portable electronic appliance is brought into contact with the data transmitter(s) of said second data transfer device (11).

14. A method according to any of the Claims 5, 6, 8, 10, 11, and 13, wherein the method is followed by either authentication of a payment or a grant of an access.
